# EUROPEAN PATENT SPECIFICATION

(11) **EP 2 761 557 B1**
(45) Date of publication and mention of the grant of the patent: **17.06.2020**
(21) Application number: 12835579.9
(22) Date of filing: 28.09.2012
(51) Int. Cl.: G01S 19/34, G06Q 30/02

(54) **PERSISTENT LOCATION TRACKING ON MOBILE DEVICES AND LOCATION PROFILING**
ANHALTENDE POSITIONSVERFOLGUNG AUF MOBILEN VORRICHTUNGEN UND POSITIONSPROFILIERUNG
SUIVI DE POSITION PERSISTANT SUR DISPOSITIFS MOBILES ET PROFILAGE DE POSITION

(30) Priority: 30.09.2011 US 201161541949 P
(43) Date of publication of application: 06.08.2014
(73) Proprietor: PayPal, Inc., San Jose CA 95131 (US)
(72) Inventor: DUNLAP, Scott, San Jose, CA 95125 (US)
(74) Representative: Nordmeyer, Philipp Werner
(86) International application number: PCT/US2012/058016
(87) International publication number: WO 2013/049638

(56) References cited:
- WO-A2-2005/052599
- US-A1- 2004 034 470
- US-A1- 2005 237 347
- US-A1- 2006 119 508
- US-A1- 2007 146 129
- US-A1- 2010 280 920
- US-A1- 2011 071 881
- US-A1- 2011 106 610

## Description

### BACKGROUND

### Field of the Invention

Embodiments of the present disclosure relate generally to location tracking, and in particular, to providing location tracking and location profiling using mobile devices.

### Related Art

More and more people are carrying around mobile devices, such as smart phones or tablet computing devices, as they travel to various places in their daily activities. The mobile devices are continually increasing in their capabilities and processing power, allowing the mobile devices to be utilized in an ever-increasing number of ways other than traditional voice communication. For example, many mobile devices are now equipped with a global positioning system (GPS) receiver or other similar component for determining the geoposition of the mobile device.

GPS receivers in mobile devices enable mobile applications that are location-aware, such as applications that allow users to search for information based on their location, to find their place in a map, or to share their location with others. GPS receivers may enable mobile applications that are even more beneficial than those conventional applications, if the GPS receivers are kept engaged to continuously update the location of the mobile devices while users carry their mobile devices to various places in their daily lives. For example, such continuously engaged GPS receiver may allow mobile applications to utilize the real-time location of the mobile devices. In another example, the real-time location of the mobile devices, hence the location of the users, may be tracked and shared, rather than users manually checking in their locations only intermittently.

However, current GPS receivers are not energy-efficient, consuming a significant amount of power from mobile device batteries that have limited capacity to begin with. For example, a smart phone with a GPS receiver engaged typically consumes 250+ microamperes per hour, which would limit the usage of a typical smart phone battery to less than four hours. Such a fast battery drain would be unacceptable to users and makes it nearly impossible for GPS to be continuously engaged for real-time location updates.

WO 2005/05299 A2 describes power tracking of the components in a GPS receiver.

US 2011/071881 A1 is directed to collecting location data for an individual and predicting behaviors and preferences of the individual based on location history.

US 2011/106610 A1 is directed to micro-segment targeted ads and offers and real time, location based, channel integrated ads and offers.

### BRIEF DESCRIPTION OF THE FIGURES

Fig. 1 is a block diagram of a networked system suitable for providing persistent location tracking and location profiling, in accordance with an embodiment of the disclosure;
Fig. 2 is a screenshot illustrating an example graphical representation of persons in proximity of a user, in accordance with an embodiment of the disclosure;
Fig. 3 is a flowchart illustrating a process to provide persistent location tracking and location profiling, in accordance with an embodiment of the disclosure;
Fig. 4 is a flowchart illustrating a process to generate targeted offers or advertisements using location profiles, in accordance with an embodiment of the disclosure; and
Fig. 5 is a block diagram of a computer system suitable for implementing one or more components of Fig. 1, in accordance with an embodiment of the disclosure.

Embodiments of the present disclosure and their advantages are best understood by referring to the detailed description that follows. It should be appreciated that like reference numerals are used to identify like elements illustrated in one or more of the figures, wherein showings therein are for purposes of illustrating embodiments of the present disclosure and not for purposes of limiting the same.

### DETAILED DESCRIPTION

The present disclosure provides systems and methods for providing persistent yet energy-efficient location tracking on mobile devices. The present disclosure also provides systems and methods for constructing location profiles, which may reveal behavioral patterns of mobile devices users, and for generating targeted offers based on the location profiles. The invention is defined in the appended claims. The following embodiments are for illustrative purposes only. In one or more embodiments, a mobile device may include a geopositioning receiver and an accelerometer, and may be configured to advantageously combine the operations of the geopositioning receiver and the accelerometer to provide persistent, accurate, and energy-efficient location tracking all day long for building location profiles, as well as for enabling various beneficial real-time and location-triggered alerts, notifications, and applications.

For example, in one or more embodiments, the geopositioning receiver and the accelerometer may be engaged in an alternating manner, where the accelerometer may act as a gating function to engage or disengage the geopositioning receiver as needed based on whether the mobile device is at rest or in motion. When the user turns on persistent location tracking on the mobile device, the geopositioning receiver may be engaged to determine the current geoposition (e.g., geographic coordinates in latitude and longitude) and to determine whether the mobile device is in motion or at rest. If it is determined that the mobile device is in motion, the geopositioning receiver may remain engaged to continuously update an accurate real-time location of the mobile device. The real-time location of the mobile device may be used to trigger various geo-fenced alerts (e.g., reminders that may be generated when the user, hence the mobile device, enters or exits a specified geographic boundaries), generate various proximity notifications (e.g., for notifying that a friend of the user is nearby), and/or control other applications or services on the mobile devices (e.g., to activate an application that is frequently used when the user is a certain location). If is determined that the mobile device is at rest based on, for example, the duration of non-movement, the acceleration rate and/or the velocity associated with the mobile device, the geopositioning receiver may be disengaged to save power, and instead the accelerometer may be engaged to monitor whether the mobile device is put back in motion. The geopositioning receiver may be reengaged when, for example, a high enough acceleration rate and/or velocity (e.g., high enough to indicate that the user is traveling at a walking speed or faster) is detected by the accelerometer and such acceleration rate and/or velocity has been sustained for a long enough duration. The geopositioning receiver may remain engaged until it is determined that the mobile device has come to rest again.

In one or more embodiments, when the mobile device is determined to be at rest, the geoposition of the location of rest may be stored, appended with information relating to the location of rest. The information relating to the location of rest may include, for example, the type of the location (e.g., what type of business or venue the location is identified with), the amount of time spent at the location, the time of day, the date, any related activity of user 104A at the location (e.g., making a purchase), and/or other information regarding the location. The type of the location, as well as other information relating to the location, may be obtained by accessing a location database or electronic business directory searchable using geopositions. Since the locations of rest may be meaningful locations visited by users in their daily routines (e.g., places where users stop for some activity rather than just passing by), a sequence of the locations of rest and associated information may form one or more location profiles that reveal behavioral patterns, trends, and statistics associated with the daily user activity. As such, the location profile may allow personalization of user experience according to the user's activity patterns. For example, various offers, incentives, and/or advertisements may be specifically targeted for the user based on spending patterns revealed from the location profiles, and such offers and/or advertisements may be delivered to the user when the user is more Likely to respond to the offers or advertisements.

In this regard, in one or more embodiments, a plurality of location profiles from multiple users may be aggregated and analyzed to generate a target group. The target group may identify users who meet one or more targeting criteria for marketing, research, or other purposes. For example, the plurality of location profiles may be aggregated and analyzed according to the targeting criteria to identify users who regularly visit stores that provide certain goods or services, and to discover any contextual information associated with each identified user (e.g., at what time the user makes the purchase and/or what prior activities lead to the purchase). The users identified as the target group may be linked to desired offers, advertisements, or other incentives, so that targeted offers may be generated. The generated targeted offers may be delivered to each user in the target group at the right time and place. For example, the targeted offers may be delivered to users at the time they usually shop and/or when they are near or heading to the marketed store (e.g., via location-triggered notifications). Thus, through persistent location tracking, location profiling, and target group analysis, various embodiment of the disclosure may permit merchants to deliver the right kind of offers or advertisements, to the right customers, at the right place and time.

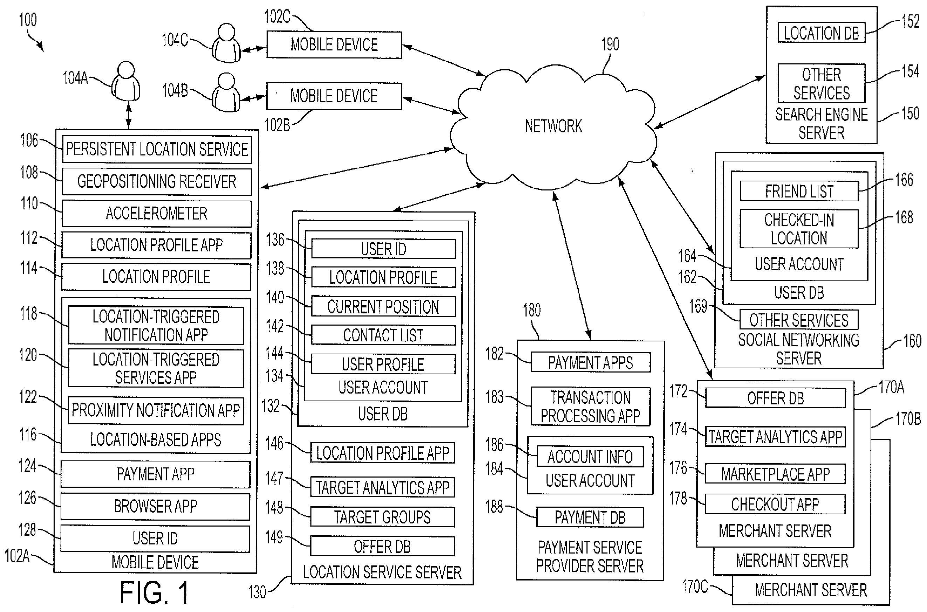

Referring now to Fig. 1, a block diagram of a networked system 100 that may be configured to provide persistent location tracking and location profiling is illustrated in accordance with an embodiment of the disclosure. Networked system 100 may include one or more mobile devices 102A-102C (collectively identified as mobile devices 102), a location service server 130, a search engine server 150, and a social networking server 160, one or more merchant servers 170A-170C (collectively identified as merchant servers 170), and a payment service provider server 180 in communication over a network 190. Mobile devices 102, location service provider server 130, search engine server 150, social networking server 160, merchant servers 170, and payment service provider server 180 may each include one or more processor, memories, storages, and other appropriate components for implementing various applications ("apps"), services, data structures, and other software and/or hardware modules described below. Users 104A-104C (collectively identified as users 104) may each be associated with mobile device 102A-102C, and may carry mobile devices 102A-102C with them as they travel to various places in their daily activities.

It should be understood that the various components of networked system 100 are shown in Fig. 1 for purposes of giving examples, and that the various components may be combined, replicated, omitted, or otherwise modified as appropriate for particular implementations of networked system 100. For example, although three mobile devices 102 are shown in Fig. 1, networked system 100 may comprise any number of mobile devices 102 as desired or applicable (e.g., as many as there are mobile devices configured as described).

As shown, networked system 100 may comprise or implement a plurality of servers and/or software components that operate to perform various methodologies in accordance with the described embodiments. Exemplary servers may include, for example, stand-alone and enterprise-class servers operating a server OS such as a MICROSOFT® OS, a UNIX® OS, a LINUX® OS, or other suitable server-based OS. It may be appreciated that the servers illustrated in Fig. 1 may be deployed in other ways and that the operations performed and/or the services provided by such servers may be combined or separated for a given implementation and may be performed by a greater number or fewer number of servers. One or more servers may be operated and/or maintained by the same or different entities

Network 190, in one embodiment, may be implemented as a single network or a combination of multiple networks. For example, in various embodiments, network 190 may include the Internet, one or more intranets, landline networks, wireless networks (e.g., through Wi-Fi, Bluetooth, near-field communication (NFC), or other wireless communication technology), and/or other appropriate types of communication networks. In another example, network 190 may include a wireless telecommunications network (e.g., 3G, 4G, HDSPA, LTE, WiMax, or other cellular phone network) adapted to communicate with other communication networks, such as the Internet.

Mobile device 102A may be implemented using any appropriate combination of hardware and/or software configured for wired and/or wireless communication over network 190. In various embodiments, mobile device 102A may be implemented as a mobile telephone (e.g., smartphone), tablet computing device, personal digital assistant (PDA), notebook computer, and/or various other generally known types of wired and/or wireless mobile computing devices. For example, mobile device 102A may be a smartphone such as an iPhone™, a tablet device such as an iPad™, a laptop computer, or other mobile device running the iOS™ operating system, the Android™ operating system, a BlackBerry™ operating system, the Microsoft® Windows® operating system, Symbian™ OS, webOS™, or other suitable operating system.

In various embodiments, mobile device 102A may include various software and/or hardware components, modules, routines, services, and/or applications that may be configured to track the location of mobile device 102A in a persistent, yet energy-efficient manner. For example, in various embodiments, mobile device 102A may include a persistent location service 106 that may run on mobile device 102A as a background process or service to continuously monitor the location of mobile device 102A. In this regard, persistent location service 106 may interface with a geopositioning receiver 108 to determine a geoposition of mobile device 102A. Further in this regard, location service 106 may interface with an accelerometer (e.g., an acceleration sensor, a gyroscope) 110 to determine an acceleration rate and/or velocity of mobile device 102A in one or more directions and/or rotations. In various embodiments, persistent location service 106 may be configured to control (e.g., turn on or off, adjust the sampling rate, or adjust other operational parameters) geopositioning receiver 108 and accelerometer 110.

In some embodiments, geopositioning receiver 108 may be implemented with a global positioning system (GPS) receiver configured to communicate with a network of orbiting satellites to determine a geoposition using trilateration and/or other suitable techniques. In other embodiments, geopositioning receiver 108 may be implemented with appropriate hardware and/or software configured to determine a geoposition using various other techniques, such as a GSM localization or other similar technique based on multilateration of signals from multiple cell sites, a control plane locating or other similar technique based on radio signal delays of cell sites, or a local-range positioning technique based on WiFi or other local-area connections. It is also contemplated that geopositioning receiver 108 may be implemented using any combination of the techniques described above. Various implementations of geopositioning receiver 108 described above may permit determination of a geoposition with high accuracy, but typically at the cost of high battery usage. As such, location determination using a GPS has conventionally been limited to intermittent use (e.g., a user activating a GPS location service on a mobile device to obtain the current location of the user), rather than being utilized as a persistent background process.

In some embodiments, accelerometer 110 may be implemented with a micro electro-mechanical system (MEMS) gyroscope having weights and damping springs or other similar mechanisms, and adapted to generate electrical signals indicative of an acceleration rate in at least one direction. In other embodiments, other suitable small-form-factor acceleration sensors or gyroscopes may implement accelerometer 110. Accelerometer 110, in its various implementations, may be an energy efficient component, typically requiring less than 20 microamperes per hour even when used with a high sampling rate (e.g., 10 to 20 samplings per second for a video game control). However, while accelerometer 110 may be utilized alone to determine a location through conventional techniques such as dead or deduced reckoning, such techniques suffer from high cumulative errors and thus may not be suitable for accurate location tracking.

Accordingly, persistent location service 106 and/or other components of mobile device 102A may be configured to advantageously combine operations of geopositioning receiver 108 and accelerometer 110 as further described herein to provide persistent and accurate location tracking of mobile device 102A, yet still in an energy-efficient manner. Such persistent, accurate, and energy-efficient location tracking may be performed continuously as a background process all day long to enable, for example, various beneficial real-time and location-triggered alerts, notifications, and applications while mobile device 102A is being carried by user 104A to various places. In addition, since the location of mobile device 102A, and hence the location of the user 104A, may be tracked constantly all day long, the daily activity patterns of user 104A may be profiled based on where, when, how long, and/or how user 104A spends time, according to some embodiments of the disclosure. Such "location profiles" associated with user 104A may allow personalization of user experience based on the activity patterns that may be revealed from the location profiles. For example, various offers, incentives, and/or other shopping-related contents may be specifically targeted for user 104A based on spending patterns revealed from the location profiles.

Accordingly, in some embodiments, mobile device 102A may include a location profile app 112 configured to create a location profile 114 as further described herein. For example, location profile app 112 may be configured to generate location profile 114 by storing a sequence of locations visited by user 104A while carrying mobile device 102A. The sequence of locations may be augmented with information including, for example, the type of each location, the amount of time spent at each location, the time of day, the date, and/or any related activity that may be identified from mobile device 102A (e.g., making a purchase).

In some embodiments, location profile app 112 may be configured to present location profile 114 on mobile device 102A (e.g., on a screen) for viewing by user 104A in response to user input (e.g., by tapping or otherwise selecting an app icon). In one implementation, location profile 114 may be sorted and/or otherwise processed for presentation. For example, locations in location profile 114 may be sorted based on the frequency of visit, displaying most frequently visited locations first. In other implementations, location profile app 112 may permit more complex filters and criteria to be applied, so as to display, for example, "all coffee shops visited more than three times in the last month" or other locations based on other desired criteria.

In some embodiments, multiple location profiles 114 may be generated, including more than one in each day. In some embodiments, mobile device 102A may communicate with an external server (e.g., location service server 130) over network 190 to obtain at least part of information used to generate location profile 114, as further described herein. In some embodiments, all or part of location profile app 112 and/or location profile 114 may be replicated, distributed, or otherwise implemented instead in an external server (e.g., in location service server 130). In such embodiments, mobile device 102A may be configured to transmit a sequence of geopositions and/or other data to the external server to generate location profiles,

Mobile device 102A may further include, in various embodiments, one or more location-based apps 116 configured to generate various notifications and/or activate various services based on the persistent, real-time location of mobile device 102A provided by persistent location service 106. Location-based apps 116 may be configured to present a suitable user interface to user 104A for user interaction. Location-based apps 116, in one or more embodiments, may interface with appropriate application programming interfaces (APIs) provided by the operating system of mobile device 102A, by other apps on mobile device 102A, and/or by external servers to implement some of the features of location-based apps 116 described below. For example, location-based apps 116 may be configured to invoke appropriate system calls for displaying pop-up notifications on mobile device 102A and/or controlling other services or processes of mobile device 102A through the API provided by the operating system of mobile device 102A. In another example, location-based apps 116 may fetch data from, submit search queries to, or otherwise interact with external servers through the APIs provided by the external servers.

Location-based apps 116 may include, in various embodiments, a location-triggered notification app 118 configured to generate various notifications as user 104A, and hence mobile device 102A carried by user 104A, enters or exits specified geographic locations. Such location-triggered notifications (also referred to as geo-fence or geo-triggered notifications) may include reminders or notifications to self (e.g., presented for viewing by user 104A on mobile device 102A) or to others (e.g., presented for viewing by other users 104B-104C on other mobile devices 102B-102C). Such reminders or notifications may be presented as text and/or symbols on display, as sounds, as voice messages, as vibrating alerts, as text messages, as emails, or in any other suitable manner or combination. User 104A may create, customize, or otherwise manage reminders or notifications through the user interface provided by location-based apps 116.

For example, a notification message may pop up with sound and/or vibration reminding user 104A that he/she needs to shop for grocery as user 104A walks by or otherwise travels near a grocery store. In another example, a text message may be sent to a family member of user 104A indicating that user 104A has left work for home with an estimated time arrival calculated from current traffic conditions.

In yet another example, a notification message containing an electronic coupon or an advertisement, along with a direction to the store offering the coupon, may pop up on the screen of mobile device 102A as user 104A walks into a mall housing the store. Such messages may permit more intelligent contextual targeting of offers and advertisements, since users are more likely to pay attention to offers or advertisements while they are shopping. Furthermore, the offers or advertisements may be specifically targeted to user 104A based on location profile 114 that may reveal shopping patterns of user 104A as further discussed herein, and thus may be even more effective.

In some embodiments, location-based apps 116 may include location-triggered services app 120 configured to activate, control, or otherwise manage other apps, processes, or services on mobile device 102A based on the real-time location provided by persistent location service 106. By way of example, location-triggered services app 120 may be configured to: start up a grocery list app as user 104A steps into a grocery store; stop a music player app, disable the ringer on mobile device 102A, and/or activate a memo pad app as user 104A steps into a meeting room; or control other applications or services in other desirable ways as mobile device 102A enters or exits specified locations. User 104A may create, customize, or otherwise reminders or notifications through the user interface provided by location-based app 116.

Location-based apps 116 may also include, in various embodiments, a proximity notification app 122 configured to provide information regarding people, places, events, or others that may be in the proximity of user 104A as determined from the real-time location of mobile device 102A provided by persistent location service 106.

In one example, proximity notification app 122 may be configured to search a database for interesting places, events, or other subject matters in the proximity to user 104A. In some embodiments, such an "ambient search" may be performed automatically to provide a real-time notification (e.g., a pop-up notification) as user 104A travels to various locations with mobile device 102A. In some embodiments, ambient searches may be performed on-demand, in response to user input (e.g., tapping or otherwise selecting an "ambient search" icon on the screen of mobile device 102A). In various embodiments, proximity notification app 122 may allow user 104A to set filters or criteria for ambient search results. For example, user 104A who desires to be informed of only a certain category of places (e.g., historic sites) within a certain radius of user 104A, may set ambient search options accordingly through the user interface provided by location-based app 116.

The database used for the ambient searches may be locally stored on mobile device 102A according to one embodiment. Alternatively, in another embodiment, mobile device 102A may access external servers (e.g., search engine server 150 maintained, for example, by Google™) to perform ambient searches. In other embodiments, mobile device 102A may comprise a local database that caches, replicates, fetches data from, receives pushed data from, synchronizes with, or otherwise interact with databases on external servers (e.g., search engine server 150), with proximity notification app 122 accessing the local database, the search engines, or both as appropriate for particular situations.

In another example of proximity notification app 122, user 104A may be notified of nearby friends, business contacts, or other people not yet known to user 104A who nonetheless meet some qualifications (e.g., share common interests, works for certain companies, etc.), as user 104A walks into conferences, parties, meetings, restaurants, or anywhere people may "check in" their locations. Such notifications may aid user 104A to reconnect with old friends and contacts, as well as to meet new people that may be of interest to user 104A, as user 104A travels to various places with mobile device 102A. In some embodiments, friend lists, contact lists, and/or other social network databases may be utilized (e.g., by communicating with social networking server 160 or location service server 130 over network 190) to discover people of interest in the proximity of user 104A. In one embodiment, for example, friend list 166 or other similar lists of contacts and friends on social networking server 160 may be accessed along with any checked-in location 168 of the friends or contacts on friend list 166, so that user 104A may be notified of nearby friends and contacts that are on a social network of user 104A. If people of interest to user 104A are also carrying mobile devices implementing persistent location service according to one or more embodiments of the present disclosure, their locations may be discovered in close to real time and without requiring manual location "check-ins" by those people. In this regard, contact list 142 along with current location 140 of users 104 on contact list 142 may be accessed from location service server 130 in addition to or in place of social networking server 160, in order to utilize locations of friends updated through location service server 130.

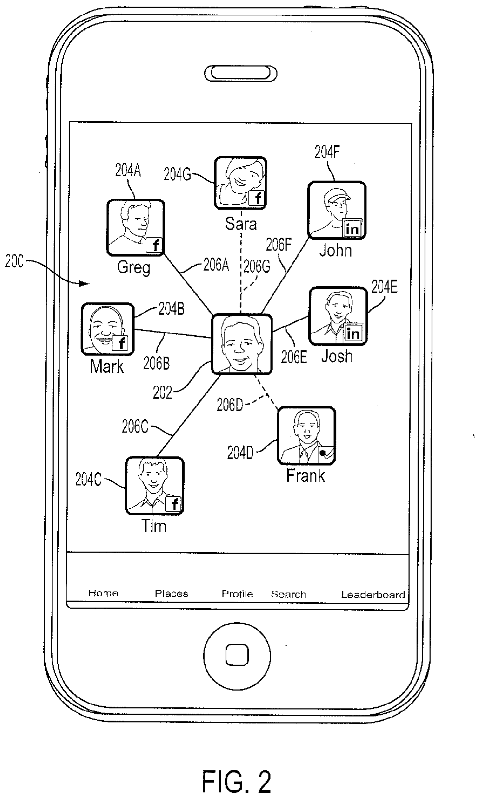

In some embodiments, proximity notification app 122 may be configured to present nearby friends, business contacts, and/or other people of interest in an interactive graphical form. Fig. 2 is a screenshot illustrating an example graphical representation of persons in proximity, in accordance with an embodiment of the disclosure. In the example shown in Fig. 2, friends and contacts in the proximity of user 104A may be represented as nodes 204A-204G that include a picture, a name, and/or other identifiers, with user 104A represented as a node 202 in the center of the screen. Any one of nodes 204A-204G may be tapped or otherwise selected by user 104A to view detailed information about the person identified by the node, to send a message to the person, or to otherwise interact or learn about the person. Pictures, names, profiles, or other data associated with the persons in the proximity of user 104A may be retrieved from internal contact lists and/or external social network databases. Lines 206A-206G connecting user node 202 to nodes 204A-204G of other persons may indicate distances from user 104A to the corresponding persons.

Referring again to Fig. 1, mobile device 102A may further include other applications as may be desired in particular embodiments to provide desired features to mobile device 102A. In particular, such other applications may include a payment app 124 configured to implement client-side features for sending or receiving payments, accessing payment provider accounts, or otherwise facilitating financial transactions assisted by a payment service provider through payment service provider server 180 over network 190. In some embodiments, payment app 124 may be configured to perform point-of-sale (POS) transactions by facilitating a checkout process at a cash register or other POS terminals. In this regard, payment app 124 may be configured to interact with POS terminals, for example, through near-field communication (NFC) technology, by generating visual code such as barcodes or quick response (QR) codes, or by other suitable technology for exchanging payment information at POS terminals. In one embodiment, location profile app 112 may be configured to include information regarding POS purchases in location profile 114 by interacting with payment app 124. In such an embodiment, location profile 114 may be used to provide useful context for understanding shopping habits of users 104. For example, location profile 114 may reveal where users 104 visit before and after purchasing certain products at certain prices, which may implicate which alterative stores or products users 104 consider before making certain purchases, what prior activities lead to purchases, what other products or activities users 104 are interested in after making certain purchases, and/or other useful information.

In various embodiments, mobile device 102A may also include one or more browser apps 126 which may be used, for example, to provide a convenient interface to permit user 102A to browse information available over network 190. For example, in one embodiment, browser app 126 may be implemented as a web browser configured to view information available over the Internet. In one embodiment, browser app 126 may be configured to append persistent, real-time location provided by persistent location service 106 to information requests made over the Internet (e.g., as part of uniform resource locator (URL), stored as cookies, as HTTP Post operation, or through other appropriate techniques), such that information accessed through browser app 126 may be customized for the real-time location of mobile device 102A. Other applications may further include, in various embodiments, security applications for implementing client-side security features, various programmatic client applications for interfacing with appropriate APIs over network 190, and/or various email, texting, voice and IM applications that allow user 104A to send and receive emails, calls, and texts through network 190.

In various embodiments, mobile device 102A may include one or more user identifiers 128 which may be implemented, for example, as operating system registry entries, cookies associated with browser application 126, identifiers associated with hardware (e.g., phone number, electronic serial number (ESN), mobile equipment identifier (MEID)) of user device 102A, or other appropriate identifiers, such as used for authentication and/or tracking of users and/or mobile device 102A. User identifiers 128 may be used by location service server 130, by social networking server 160, by merchant servers 170, by payment service provider server 180, and/or by other external servers to associate user 104A with particular accounts maintained by the servers. User identifiers 128 may be same for two or more servers or may be unique for each server as desired for particular implementations of networked system 100.

Other mobile devices 102B-102C may be implemented in the same or similar manner as mobile device 102A, such that mobile devices 102B-102C may provide persistent, real-time location tracking and various location-based apps as users 104B-104C take mobile devices 102B-102C to various places. Further, it is contemplated that all or part of persistent location service 106, location profile app 112, location-based apps 116, and/or other components of mobile device 102A described above may alternatively be provided as software development kits (SDKs) or other forms of software/hardware modules that may be embedded into or otherwise utilized by various other applications, services, processes, components, or modules of mobile devices 102. It is also contemplated that all or part of persistent location service 106, location profile app 112, location-based apps 116, and/or other components of mobile devices 102 may be distributed and/or replicated on external servers and/or devices as desired for particular implementations. For example, in some embodiments, part of location profile app 112 and location-based apps 116 may be implemented at location service server 130, where aggregate location profiles from multiple user devices 102 may be analyzed and location-triggered notification may be transmitted to user devices 102 in various forms (e.g., pop-up notifications, text messages, emails, voice alerts, etc.).

Location service server 130 may interact with mobile devices 102 via network 190 as described above to facilitate location profile construction, location-based targeting, and/or various location-based applications. Location service server 130 may be maintained by any one or more of various service providers, merchants, or other entities that desire to facilitate and/or utilize location profiles and/or location-based targeting. By way of example, location service server 130 may be maintained by payment service providers (e.g., PayPal™ of San Jose, CA), search providers (e.g., Google™, Bing™, Localeze™, YellowPage.com®), social networking providers (e.g., Facebook™, LinkedIn®, Foursquare™), group shopping and deals service providers (e.g., GroupOn®, LivingSocial®), various online and offline merchants, and/or other entities providing location services described herein. As may be appreciated, some service providers and/or merchants may provide any combination of services identified above.

In some embodiments, location service server 130 may access information from search engine server 150, social networking server 160, merchant servers 170, payment service provider server 180, and/or other servers via network 190 to facilitate location profile construction, location-based targeting, and/or various location-based applications. For example, a location database 152 of search engine server 150 may be accessed by location service server 130 in constructing location profiles. In another example, a user database 162 of social networking server 160 may be accessed by location service server 130 in generating proximity notifications of nearby friends and contacts. In such embodiments, location service server 130 may also act as an intermediary for accessing information from the various other servers, gathering information to be utilized by mobile devices 102 that communicate with location service server 130. In other embodiments, mobile devices 102 may access at least some information directly from search engine server 150, social networking server 160, merchant servers 170, payment service provider server 180, and/or other servers in addition to, or instead of, relying on location service server 130.

In some embodiments, location service server 130 may be combined or co-located with search engine server 150, social networking server 160, merchant server 170, payment service provider server 180, and/or other servers as desired for particular implementations of networked system 100. For example, a payment service provider may desire to maintain location service server 130, payment service provider server 180, and social networking server 160 combined and/or co-located in a same server farm that processes requests for various services provided by the payment service provider.

In various embodiments, location service server 130 may maintain a user database 132 comprising a plurality of user accounts 134 each associated with one of users 104 and identified by a user identifier 136. User accounts 134 may each comprise a location profile 138, a current position 140, a contact list 142, and/or a user profile 144 associated with each one of users 104. In some embodiments, user account 134 may also comprise other information relating to users 104, such as contact information, user profiles, and/or user identifiers and credentials to be used for accessing social networking or other services, as desired for particular implementations of networked system 100.

Location profile 138 may be similar to location profile 114 that may be generated at mobile devices 102. As described above in connection with location profile app 112, in some embodiments, location profile 138 may be generated at location service server 130 instead of or in addition to mobile devices 102. In such embodiments, location processed using various desired filters and criteria to determine a group of users targeted for certain deals, advertisements, or other purposes. By way of example, such aggregate location profiles may be data mined or otherwise processed to find those users that frequent coffee shops in certain area for more than certain times a week at certain times of a day, so that those users may be targeted with more relevant and effective offers and advertisements specifically customized for them. In one embodiment, various location-linked statistics, trends, and patterns may be obtained by performing appropriate statistical analysis or data mining on aggregate location profiles. For example, the aggregate location profiles may be analyzed to reveal behavioral patterns relating to when, for how long, for what purpose, and/or in what order people visit places. Such location-based analytics may be useful as a marketing or operational research tool for retailers, restaurants, other merchants, or other for-profit or non-profit entities that have physical locations that may be visited by the public.

In this regard, location service server 130 may also include a target analytics application 147 configured to data mine or otherwise process the plurality of location profiles 138 from multiple users 104 to determine target groups 148 according to desired filters or criteria, or to obtain various location-linked statistics, trends, or patterns. In various embodiments, target groups 148 may include contact information, identifiers (e.g., user identifier 128), other information associated with users who meet certain targeting criteria for marketing, advertisements, or other purposes. Target groups 148 may include one or more groups each satisfying certain targeting criteria. Target groups 148 and/or various location-linked statistics may be generated and stored on location service server 130 on behalf of merchants or other entities, based on criteria, filters, or parameters provided by the merchants or other entities, according to some embodiments of networked system 100.

In some embodiments, location service server 130 may maintain, on behalf of a merchant, an offer database 149 that includes offers, coupons, deals, or other incentives which consumers can take advantage of when shopping with the merchant. In such embodiments, location service server 130 may be configured to generate closely targeted offers or other incentives by linking offers to desired target groups. In some embodiments, location service server 130 may deliver or otherwise transmit the generated targeted offers to users in target groups, on behalf of merchants. The delivery may be by location-triggered notifications (via location-triggered notification app 118 at mobile devices 102) or by more conventional means such as email, text messages, or banner ads.

In some embodiments, location service server 130 may be configured to implement a platform-as-a-service (PaaS) or software-as-a-service (SaaS) architecture, allowing merchants to generate target groups 148 and/or deliver targeted offers using location service server 130 through appropriate APIs. In other embodiments, location service server 130 may generate and transmit target groups 148 to merchant server 170A in response to a request received from merchant server 170A. In such embodiments, merchant server 170A may link the received target groups with offers in its own offer database 172 for generation and deliver of offers to closely targeted consumers. In yet other embodiments, location service server 130 may generate and transmit location profiles 138 to merchant server 170A. In such embodiments, merchant server 170A may include its own target analytics app 174 that may utilize the received location profiles to generate target groups and/or to discover trends and patterns.

Thus, for example, various components of networked system 100 may be configured to advantageously generate more closely targeted offers and/or deliver such targeted offers more effectively, through persistent location tracking, location profiling, and target analytics. In other words, various embodiments of the disclosure may permit merchants to deliver the right kind of offers, deals, or advertisements, to the right consumers at the right place and time. In comparison, conventional coupons or offers are loosely targeted, such as a coupon for grocery sent to all households in a neighborhood, or an offer for male grooming products being targeted to men.

By way of example, in a conventional marketing campaign for a premium coffee shop, offers or advertisements were typically loosely targeted by general demographics and/or geographical boundary, resulting in offers such as "a 50% off coupon to 1 million people in a certain neighborhood with about 2,000 of those expected to redeem." With such loosely targeted offers, there is much less certainty that consumers, even if they redeem the offers, would eventually return and become valuable customers. In contrast, persistent location tracking, location profiling, and target analytics provided by various embodiments of the disclosure may be utilized to generate targeted offers such as "a 50% coupon sent to 18,000 consumers who stop at a premium coffee shop three or more time per weeks," which may be delivered at the time of day when they usually buy coffee and/or when they are near the marketed coffee shop, and may be delivered as a notification, message, or email containing directions to the marketed coffee shop. Not only such closely targeted, location-based, real-time offers are more likely to catch consumers' attention, but also catch attention of consumers that are likely to return more regularly.

Turning again to user accounts 134 of location service server 130, current position 140 may comprise a current geoposition of a corresponding one of mobile devices 102 carried by users 104. Current position 140 may be received from mobile devices 102 periodically or based on some events, such as when mobile devices 102 are at rest, when mobile devices 102 have moved more than a specified distance, and/or when other information is transmitted from mobile devices 102 to location service server 130. For example, a current geoposition of mobile device 102A may be received at location service server 130 to update location profile 138 as well as current position 140 associated with users.

In various embodiments, current position 140 may be used in generating various location-triggered notifications or proximity notifications. For example, current position 140 of friends or contacts on contact list 142 may be transmitted to mobile devices 102 for notification of nearby friends, as described above with respect to proximity notification app 122. In some embodiments, various operations of location-triggered notification app 118 and/or proximity notification app 122 may be performed additionally or alternatively at location service server 130 using current positions 140 of users 104. For example, location service server 130 may be configured to transmit offers or advertisements (e.g., by pop-up notification, text message, web banners) from offer database 138 based on current position 136. In another example, location service server 130 may be configured to transmit proximity notifications based on a comparison of user profiles 144 of users 104 that are in the proximity of each other. User profile 144 may include user interests, occupation, or other information provided by users 104, and/or behavioral patterns (e.g., where users 104 shop often) obtained from location profiles 138. Thus, for example, users 104 may be notified of other users 104 nearby that may have common interests, allowing users 104 to meet new people of interest as they walk into conferences, parties, restaurants, or other places where people may gather. In some embodiments, location service server 130 may be configured to access friend lists 166 and checked-in locations 168 from social networking server 160 to use in generating proximity notifications of friends in a social network of users 104.

Search engine server 150 may be maintained by search providers (e.g., Google™, Bing™), electronic business directory providers (e.g., Tocaleze™, YellowPage.com®), business rating service providers (e.g., Yelp™), or by any entity that desires to facilitate and/or utilize location profiles and related services (e.g., by maintaining location service server 130). As discussed above, search engine server 150 may be combined or co-located with locations service server 130 as desired for one or more embodiments of networked system 100. In addition to maintaining location database 152 described above, search engine server 150 may include other services 154 as desired. For example, other services 154 may include a web search engine, map service, rating service, news portal service, and/or other desired services, along with appropriate databases.

Social networking server 160 may be maintained by various types of social networking providers (e.g., Facebook™, LinkedIn®, Foursquare™) or by any entity that desires to facilitate and/or utilize location profiles and related services (e.g., by maintaining location service server 130). As discussed above, social networking server 160 may be combined or co-located with locations service server 130 as desired for one or more embodiments of networked system 100. In various embodiments, social networking server 160 may maintain a user database 162 comprising a plurality of user accounts 164 associated with users subscribed to the social networking service provided by social networking server 160. User account 164 associated a user may comprise friend list 166 that identifies other users that are "friends" of the user and checked-in location 168 that the user indicates as the current location of the user. In some embodiments, friend list 166 and checked-in location 168 may be utilized by mobile device 102 and/or location service server 130 as described above to generate proximity notifications and/or to perform other location-based services. Social networking server 160 may include other services 169 as desired for particular social networking providers.

Merchant servers 170 may be maintained, for example, by a conventional or online merchant, conventional or digital goods seller, individual seller, and/or any other entity offering goods or services to be purchased by consumers. As described above, merchant servers 170, in some embodiments, may maintain offer database 172 and/or target analytics app 174 that may be utilized by merchant servers 170 and/or location service server 130 to generate closely targeted offers and/or to discover behavioral patterns of users 104.

In addition, merchant servers 170 may include a database identifying available products and/or services (e.g., collectively referred to as items) which may be made available for viewing and purchase by users 104. Accordingly, merchant servers 170 may also include a marketplace application 176 which may be configured to serve information over network 190 to browser app 126 of user devices 102. Merchant servers 170 may also include a checkout application 178 which may be configured to facilitate the purchase by users 104 of goods or services identified by marketplace application 176. Checkout application 178 may be configured to accept payment information from or on behalf of users 104 through payment service provider server 180 over network 190. In some embodiments, checkout application 178 may be configured to provide information regarding purchases made by users to mobile devices 102 and/or location service server 130 (e.g., to location profile app 112/146) for inclusion of such information in location profiles 114/138 to provide a better context to understanding user behavior and/or information relating to the locations visited by the user.

Payment service provider server 180 may be maintained, for example, by an online payment service provider (e.g., PayPal™) which may provide payment between users 104 and the operator of merchant servers 170. In this regard, payment service provider server 180 may include one or more payment applications 182 which may be configured to interact with user devices 102 and/or merchant servers 170 over network 190 to facilitate the purchase of goods or services, communicate/display information, and send payments by users 104 of user devices 102.

Payment provider server 180 may also maintain a plurality of user accounts 184, each of which may include account information 186 associated with individual users. For example, account information 186 may include private financial information of users of devices such as account numbers, passwords, device identifiers, user names, phone numbers, credit card information, bank information, or other financial information which may be used to facilitate online transactions by users 104. Advantageously, payment application 182 may be configured to interact with merchant servers 170 on behalf of users 104 during a transaction with checkout application 178 to track and manage purchases made by users 104 and which funding sources are used, as well as incentives for a user.

A transaction processing application 183, which may be part of payment application 182 or separate, may be configured to receive information from user devices 102 and/or merchant servers 170 for processing and storage in a payment database 188. For example, transaction processing application 183 may include one or more applications to process information from users 104 for processing an order and payment using various selected funding instruments. As such, for some embodiments, transaction processing application 183 may be configured to provide to mobile devices 102 and/or location service server 130 (e.g., to location profile app 112/146) information regarding the payment transactions associated with each one of users 104 for inclusion of such information in location profiles 114/138 to provide a better context to understanding user behavior and/or information relating to the locations visited by the user. As discussed above, payment service provider server 180 may be combined or co-located with locations service server 130 as desired for one or more embodiments of networked system 100.

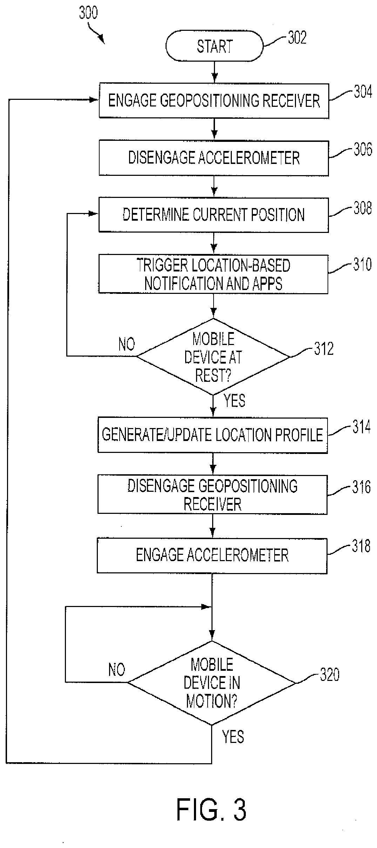

Referring now to Fig. 3, a flowchart is shown of a process 300 for persistent location tracking and location profiling in accordance with an embodiment of the disclosure. Various operations of process 300 may be performed by, for example, mobile devices 102A-102C of Fig. 1 to provide persistent yet energy-efficient location tracking of mobile devices 102, to generate location profiles 114 useful for generating closely targeted offers and/or discovering behavioral patterns of users 104, and/or to provide various location-based notifications and/or services. In some embodiments, process 300 may be embodied in computer-readable instructions for execution by one or more processor of mobile devices 102, such that mobile devices 102 perform various operations of process 300.

Process 300 may start at block 302 when, for example, user 104A activates (e.g., by tapping or selecting corresponding icons, or otherwise giving a command to run) one or more applications on mobile device 102A (or any other mobile devices 102) configured to perform various operations of process 300. At block 304, geopositioning receiver 108 may be engaged. Geopositioning receiver 108 may be engaged by turning it on or otherwise putting it into normal operating mode for acquiring a current geoposition associated with mobile device 102A. Geopositioning receiver 108 may be engaged through appropriate APIs or system calls provided by, for example, the operating system of mobile device 102A. At block 306, accelerometer 110 may be disengaged (e.g., turned off or otherwise put into a non-operating mode through appropriate APIs or system calls) if accelerometer was already engaged.

At block 308, a current geoposition associated with mobile device 102A may be determined using the engaged geopositioning receiver. As discussed above in connection with geopositioning receiver 108 of Fig. 1, geopositioning receiver 108 may obtain a geoposition of mobile device 102A with high accuracy using GPS or other appropriate technology. The obtained geoposition may be read or otherwise accessed through appropriate APIs or system calls provided by, for example, the operating system of mobile device 102A.

At block 310, various location-triggered and/or proximity notifications may be generated based on the current geoposition of mobile device 102A. Various location-triggered applications and/or services may also be activated based on the current geoposition of mobile device 102A. Various location-triggered notification, proximity notifications, and/or location-triggered applications may be generated or activated in manners described above for location-based apps 116 of Fig. 1. For example, the current geoposition may be compared against geographical boundaries (also referred to as geo-fences) associated with reminders or notifications. If the current geoposition of mobile device 102A is determined to be within such boundaries, corresponding reminders and/or notifications to self or to others may be generated and presented as text and/or symbols on display, as sounds, as voice messages, as vibrating alerts, as text messages, as emails, or in any other suitable manner or combination. In another example, the current geoposition may be compared against locations of interesting places, interesting events, friends, contacts, or other people of interest to user 104A to generate proximity notifications or to present nearby friends or places graphically on mobile device 102A. In yet another example, the current geoposition may be compared against geo-fences associated with activating, controlling, or otherwise managing various services or applications on mobile device 102A.

As also described above, in some embodiments, location-triggered or proximity notifications may also be generated by location service server 130. For this and other purposes described above with respect to location service server 130 of Fig. 1, in some embodiments the current geoposition may be transmitted and updated to location service server 130, for example, at step 308 above. In such embodiments, the current geoposition may be updated to location service server 130 periodically or based on some events, such as when mobile devices 102 have moved more than a specified distance as determined using geopositioning receiver 108 and/or when other information is transmitted from mobile devices 102 to location service server 130.

At step 312, mobile device 102A may determine whether mobile device 102A, and hence user 104A, is at rest (e.g., staying at a same general location) or in motion (e.g., traveling). In various embodiments, whether mobile device 102A is at rest or in motion may be determined based on a duration of non-movement, an acceleration rate, and/or a velocity obtained using geopositioning receiver 108 of mobile device 102A. For example, based on an observation of geopositions over a period, mobile device 102A (e.g., using one or more processors of mobile device 102A running persistent location service 106) may determine a duration of non-movement observed for mobile device 102A, and an acceleration rate and a velocity at which mobile device 102A is traveling. In turn, mobile device 102A may determine whether there is any meaningful displacement of geoposition that may indicate that mobile device 102A is in motion or not, based on the observed by user 104A with greater accuracy, as well as determine the best time to send user 104A closely targeted offers or advertisements.

As described above with respect to location profile app 1 12/146 and location profile 114/138, various operations of updating and/or generating location profile 114/138 may be performed at location service server 130, according to some embodiments. In such embodiments, mobile device 102Amay be said to update and/or generate location profile 114/138 by transmitting the current geopositions of location of rest to location service server 130 over network 190. In one embodiment, location profile 138 may be generated and stored only on location service server 130. In other embodiments, location profile 114 on mobile device 102A may be synchronized or otherwise updated with information transmitted from location service server 130.

At block 316, geopositioning receiver 108 may be disengaged (e.g., turned off or otherwise put into a non-operating mode through appropriate APIs or system calls). At block 318, accelerometer 110 may be engaged (e.g., turned on or otherwise put into an operating mode through appropriate APIs or system calls), if accelerometer 110 was previously disengaged. As discussed above, a typical mobile device such as a smart phone with a GPS engaged typically requires 250+ microamperes per hour, which would drain a typical smart phone battery in less than four hours. In comparison, engaging accelerometer 110 consumes much less battery. In experiments carried out in connection with the present disclosure, it was discovered that for typical users their mobile devices are at rest approximately 80% of the time. Thus, by disengaging geopositional receiver 108 and instead engaging accelerometer 110 when mobile device 102A is at rest, process 300 may significantly reduce battery usage, which in turn allows process 300 to persistently track the location of a typical mobile device for twelve or more hours without completely draining the battery, as described herein. In some embodiments, accelerometer 110 may be engaged at a lower sampling rate (e.g., one to three samples per second) than the sampling rate typically utilized for accelerometers on mobile devices (e.g., ten to twenty samples per second for use as video game control or other interactive input), thereby reducing battery usage even further.

At block 320, mobile device 102A may determine whether mobile device 102A, and hence user 104A, is in motion (e.g., resumed traveling) or still at rest. In various embodiments, whether mobile device 102A is put back in motion may be determined based on a duration of movement, an acceleration rate, and/or a velocity obtained using accelerometer 110 that was engaged, for example, at block 318. For example, if any motion is detected using accelerometer 110, mobile device 102A (e.g., by one or more processors running persistent location service 106) may further determine whether the acceleration rate and/or velocity is high enough and/or whether such acceleration rate and/or velocity is sustained for a long enough time to indicate that mobile device 102A is in motion. By way of example, it may be determined that mobile device 102A is in motion if the acceleration rate and/or velocity is equal to or greater than that of a typical walk, and such acceleration rate and/or velocity has been maintained long enough to cover 25 feet or more (or other appropriate distance indicative of leaving a typical area of interest) traveled in one direction.

If it is determined that mobile device 102A is still at rest, process 300 repeats block 320, continuing to monitor whether mobile device 102A is put in motion using accelerometer 110. If it is determined that mobile device 102A is put in motion, process 300 returns to and continues again from block 304, engaging geopositioning sensor 108 to determine the current geoposition and generate/activate location-triggered notifications or services until mobile device 102A comes to rest again. Thus, such alternation of geopositioning receiver 108 engagement and accelerometer 110 engagement is continuously repeated, with accelerometer 110 acting as a gating function to engage or disengage geopositioning receiver 108 as needed based on whether mobile device 102A is at rest or in motion. One or more embodiments of process 300 may, therefore, track the location of mobile devices in a persistent, accurate, and yet energy-efficient manner that advantageously enables various real-time location-triggered notifications/activations as well as construction of location profiles of all meaningful places (e.g., all places where user stops for some activity) visited by users in their daily routines.

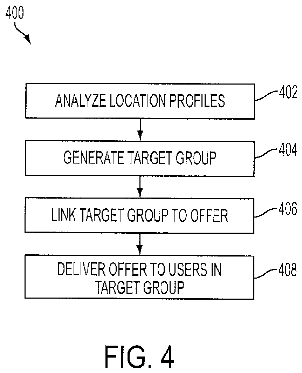

Referring now to Fig. 4, a flowchart is illustrated of a process 400 for generating closely targeted offers or advertisements using location profiles, in accordance with an embodiment of the disclosure. Various operations of process 400 may be performed, for example, at location service server 130 (e.g., by one or more processors running location profile application 146 and/or target analytics application 147) on behalf of a merchant, at merchant server 170 (e.g., by one or more processors running target analytics application 174), or any appropriate combination of location services server 130, merchant server 150, and/or other components of networked system 100 of Fig. 1.

At block 402, locations profiles may be aggregated and analyzed. In various embodiments, a plurality of location profiles 138 from multiple users 104 may be aggregated, data mined, and/or otherwise processed to reveal location-linked behavioral patterns, trends, and statistics, as described above for target analytics applications 147/174. For example, the plurality of location profiles 138 may be aggregated and analyzed to reveal behavioral patterns relating to when, for how long, for what purpose, in what order people visit places, or other contextual information.

At block 404, target groups 148 may be generated based on one or more targeting criteria. In various embodiments, location profiles 138 may be filtered and/or otherwise processed to discover users who meet certain targeting criteria for marketing, research, or other purposes, as described above for target analytics applications 147/174 and target groups 148. In some embodiments, the targeting criteria may be provided by a merchant, based on some marketing decision by the merchant (e.g., to target customers who shop regularly at a competing store). The targeting criteria may be received electronically by location service server 130 and/or merchant server 170 over network, or otherwise inputted to location service server 130 and/or merchant server 170 (e.g., after the merchant delivers the desired targeting criteria in a more conventional means, such over the phone or on documents).

In some embodiments, the targeting criteria may at least in part be generated by and/or suggested to the merchant by, for example, location service server 130 and/or merchant server 170, based on the analysis of aggregated location profiles 138. The generated targeting criteria may be directed to potential target groups that were not otherwise discovered by the merchant. By way of example, the aggregation and analysis of location profiles 138 may reveal that there are a large number of users 104 that regularly visit premium coffee shops near their home, on their way home from a workplace near the merchant. Those users may then be suggested to the merchant as potential new customers to target, even though it may not have occurred to the merchant that consumers that drink coffee in other neighborhoods could also be potential regular customers

At block 406, the generated target groups may be linked to or otherwise associated with offers or advertisements. In various embodiments, the generated target groups may be linked to desired advertisements, offers, coupons, deals, or other incentives. In some embodiments, the desired advertisements, offers, coupons, deals, or other incentives may be selected from offer database 149/172, as described above. In some cases, the merchant may designate which offers or advertisements are to be used for particular target groups. In other cases, the desired advertisements or offers may be selected, modified, or created based on the analysis of location profiles 138. In this regard, block 406 in some embodiments may also include selecting, modifying, or creating offers or advertisements to be linked to the generated target groups based on the analysis of location profiles 138. For example, if the analysis of location profiles 138 reveals that many users 104 visit an ice cream shop after stopping over at a coffee shop, an offer linked to coffee drinkers may be customized or created to offer a discount for ice cream when purchased together with coffee. In another example, the discount amount or percentage may be adjusted based on the size of the target group, so as to control any marketing expense that may be incurred by offering discounts while at the same time offering a discount amount that would attract a desired number of customers.

At block 408, the linked offers may be transmitted, sent, presented, or otherwise delivered to the users in the target group. In some embodiments, the offers may be delivered as notifications or text messages to mobile device 102A sent from location service server 130 or merchant server 170. In such embodiments, the offers may be delivered when consumers usually shop for the offered items and/or when consumers are at rest in locations nearby the merchant's store. In some embodiments, the offers may be delivered as location-triggered notifications (via location-triggered notification app 118 at mobile devices 102) which may allow real-time delivery of offers or advertisements, for example, when consumers are walking nearby the merchant's store or when consumers have entered a mall housing the store. The delivery may also be by more conventional means such as email, text messages, or banner ads.

Thus, for example, various embodiments of process 400 may advantageously generate more closely targeted offers and/or deliver such targeted offers more effectively. By aggregating and analyzing location profiles that may be obtained from persistent location tracking, selecting target groups and offers based on such location profiles, and delivering targeted offers at the right time and place, various embodiments of process 400 may generate closely targeted offers that are not only more likely to catch consumers' attention, but also catch attention of consumers that are likely to return more regularly.

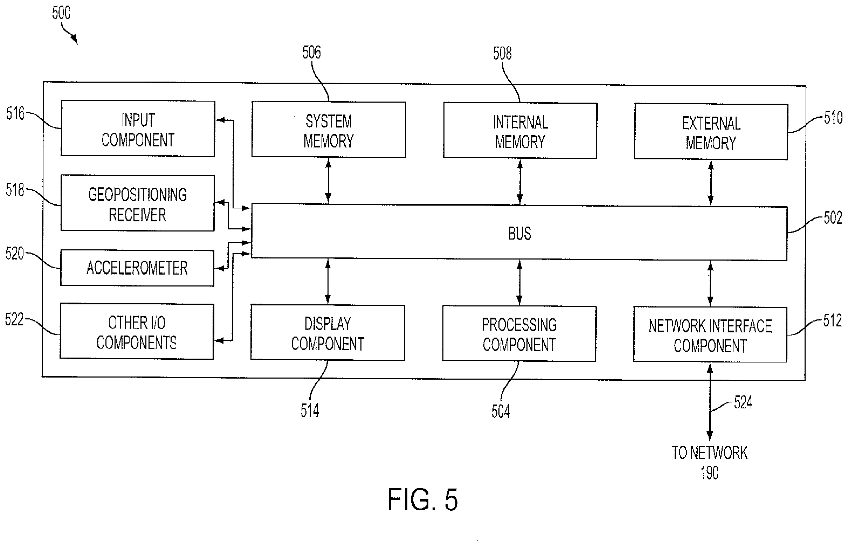

Fig. 5 is a block diagram of a computer system 500 suitable for implementing one or more embodiments of the present disclosure. In various implementations, computer system 500 may correspond to any of mobile devices 102, location service server 130, search engine server 150, social networking server 160, merchant servers 170, or payment service provider server 180. Computer system 500 may be a mobile device such as a smartphone such as an iPhone™ or other mobile device running the iOS™ operating system, the Android™ operating system, aBlackBerry™ operating system, the Microsoft® Windows® Phone operating system, Symbian™ OS, or webOS™. Computer system 500 may also be a tablet computer such as the iPad™ or other similar device running the aforementioned operating systems. Computer system 500 may also be personal computer, laptop computer, netbook, or tablet computer. Further, computer system 500 may also be a server or one server among a plurality of servers which together may implement various servers of Fig. 1.

Computer system 500 may include a bus 502 or other communication mechanism for interconnecting various components within computer system 500 and communicating data, signals, and information between various components of computer system 500. Such components may include a processing component 504, which may be one or more processors, micro-controllers, or digital signal processors (DSP), a system memory component 506, which may correspond to random access memory (RAM), an internal memory component 508, which may correspond to read-only memory (ROM), and an external or static memory 510, which may correspond to optical, magnetic, or solid-state memories.

Computer system 500 may also include a network interface component (NIC) 512 configured for communication with a network such as network 190 of Fig. 1. In various embodiments, NIC 512 may include a wireless communication component, such as a wireless broadband component, a wireless satellite component, or various other types of wireless communication components including radio frequency (RF), microwave frequency (MWF), and/or infrared (IR) components configured for communication with network 190. In various embodiments, NIC 512 may also be configured to interface with a coaxial cable, a fiber optic cable, a digital subscriber line (DSL) modem, a public switched telephone network (PSTN) modem, an Ethernet device, and/or various other types of wired and/or wireless network communication devices adapted for communication with network 190.

Computer system 500 may further include a display component 514 for displaying information to user, such as users 104. Display component 514 may be implemented using a liquid crystal display (LCD) screen, an organic light emitting diode (OLED) screen (including active matrix AMOLED screens), an LED screen, a plasma display, or a cathode ray tube (CRT) display. Computer system 500 may also include an input component 516, allowing for a user of computer system 500 to input information to or otherwise interact with computer system 500. An input component 516 may include, for example, a keyboard or key pad, whether physical or virtual (e.g., presented on a touch screen), a mouse, a touch screen, or other component suitable for inputting numbers and letters, selecting buttons, icons, or links, or otherwise inputting information or interacting with computer system 500.

Computer system 500 may include a geopositioning receiver 518 implemented in a same or similar manner as geopositioning receiver 108 described for mobile device 102A above. Computer system 500 may include also include an accelerometer 520 implemented in a same or similar manner as accelerometer 110 described for mobile device 102A above. In some embodiments, other I/O components 522 may include speakers and/or microphones with associated logic configured to convert signals into sound waves that can be heard by users through speakers and/or to convert sound waves received at microphones into appropriate analog/digital signals. In some embodiments, other I/O components 522 may also include a vibrating motor configured to alert users by creating vibration that can be felt by users.

Logic may be encoded in a computer readable medium, which may refer to any medium that participates in providing instructions to processing component 504 for execution. Such a medium may take many forms, including but not limited to, non-volatile media, volatile media, and transmission media. The medium may correspond to any of system memory 506, internal memory 508, and/or external or static memory 510. In some embodiments, the computer readable medium is non-transitory. In various implementations, non-volatile media include optical or magnetic disks, volatile media includes dynamic memory, and transmission media includes coaxial cables, copper wire, and fiber optics, including wires that comprise system bus 502. According to some embodiments, transmission media may take the form of acoustic or light waves, such as those generated during radio wave and infrared data communications.

Some common forms of computer readable media includes, for example, floppy disk, flexible disk, hard disk, magnetic tape, any other magnetic medium, CD-ROM, any other optical medium, punch cards, paper tape, any other physical medium with patterns of holes, RAM, PROM, EPROM, FLASH-EPROM, any other memory chip or cartridge, or any other medium from which a computer is adapted to read.

In various embodiments of the present disclosure, execution of instruction sequences to practice the present disclosure may be performed by computer system 500. In various other embodiments of the present disclosure, a plurality of computer systems 500 coupled by a communication link 524 to the network (e.g., such as a LAN, WLAN, PTSN, and/or various other wired or wireless networks, including telecommunications, mobile, and cellular phone networks) may perform instruction sequences to practice the present disclosure in coordination with one another.

Where applicable, various embodiments provided by the present disclosure may be implemented using hardware, software, or combinations of hardware and software. Also, where applicable, the various hardware components and/or software components set forth herein may be combined into composite components comprising software, hardware, and/or both without departing from the spirit of the present disclosure. Where applicable, the various hardware components and/or software components set forth herein may be separated into sub-components comprising software, hardware, or both without departing from the scope of the present disclosure. In addition, where applicable, it is contemplated that software components may be implemented as hardware components and vice-versa.

Software, in accordance with the present disclosure, such as program code and/or data, may be stored on one or more computer readable mediums. It is also contemplated that software identified herein may be implemented using one or more general purpose or specific purpose computers and/or computer systems, networked and/or otherwise. Where applicable, the ordering of various steps, blocks, or operations described herein may be changed, combined into composite steps, blocks, or operations, separated into sub-steps, sub-blocks, or sub-operations, omitted, and/or otherwise modified to provide features described herein.

The foregoing disclosure is not intended to limit the present disclosure to the precise forms or particular fields of use disclosed. As such, it is contemplated that various alternate embodiments and/or modifications to the present disclosure, whether explicitly described or implied herein, are possible in light of the disclosure. Having thus described embodiments of the present disclosure, persons of ordinary skill in the art will recognize that changes may be made in form and detail without departing from the scope of the present disclosure. Thus, the present disclosure is limited only by the claims.

## Claims

1. A mobile device (102A) comprising:
a geopositioning receiver (108), in particular a global positioning (GPS) receiver, configured to determine a geoposition of the mobile device;
an accelerometer (110) configured to determine an acceleration rate of the mobile device (102A); and
a processor in communication with the geopositioning receiver (108) and the accelerometer (110), the processor configured to:
determine, whether the mobile device (102A) is at rest within a location for a duration of time, using geopositions of the mobile device (102A) determined by the geopositioning receiver, based on a duration of non-movement of the mobile device, and/or an acceleration rate, and/or a velocity of the mobile device (102A),
disengage the geopositioning receiver (108) and engage the accelerometer upon determining that the mobile device (102A) is at rest within the location for the duration of time,
determine, using the determined acceleration rate, whether the mobile device is in motion based on a duration of movement, and/or the determined acceleration rate and/or a velocity;
reengage the geopositioning receiver and disengage the accelerometer upon determining that the mobile device is in motion; and
transmit to a location server (130) over a network at rest geopositions of the mobile device.

2. The mobile device (102A) of claim 1, wherein the processor is further configured to generate a location profile (114) associated with a user of the mobile device, wherein the location profile (114) comprises information relating to a location where the mobile device (102A) is determined to be at rest.

3. A method comprising:
determining a geoposition of a mobile device (102A) based on data received from a geoposition receiver (108) of the mobile device (102A);
determining an acceleration rate of the mobile device (102A) based on signals received from an accelerometer (110) of the mobile device (102A);
determining whether the mobile device (102A) is at rest for a duration of time within a location, using geopositions of the mobile device (102A) determined by the geopositioning receiver, based on a duration of non-movement of the mobile device, and/or an acceleration rate of the mobile device (102A), and/or velocity of the mobile device (102A);
disengaging a geopositioning receiver (108) of the mobile device (102A) and engaging the accelerometer upon determining that the mobile device (102A) is in motion;
determining, using the determined acceleration rate, whether the mobile device is in motion based on a duration of movement, and/or the determined acceleration rate and/or a velocity;
reengaging the geopositioning receiver and disengaging the accelerometer upon determining that the mobile device is in motion; and
transmitting to a location server (130) over a network at rest geopositions of the mobile device.

4. A non-transitory computer-readable medium comprising a plurality of instructions which, when executed by one or more processors, causes the one or more processors to perform a method comprising:
determining a geoposition of a mobile device (102A) based on data received from a geoposition receiver (108) of the mobile device (102A);
determining an acceleration rate of the mobile device (102A) based on signals received from an accelerometer (110) of the mobile device (102A);
determining whether the mobile device (102A) is at rest within a location for a duration of time, using geopositions of the mobile device (102A) determined by the geopositioning receiver, based on a duration of non-movement of the mobile device, and/or an acceleration rate of the mobile device (102A), and/or a velocity of the mobile device (102A);
disengaging a geopositioning receiver (108) of the mobile device (102A) and engaging the accelerometer upon determining that the mobile device (102A) is at rest within the location for the duration of time;
determining, using the determined acceleration rate, whether the mobile device is in motion based on a duration of movement, and/or the determined acceleration rate and/or a velocity;
reengaging the geopositioning receiver and disengaging the accelerometer upon determining that the mobile device is in motion; and
transmitting to a location server (130) over a network at rest geopositions of the mobile device.

5. The non-transitory computer-readable medium of claim 4 or the method of claim 3, wherein the method further comprises generating a location profile (114) associated with a user of the mobile device (102A), wherein the location profile (114) comprises information relating to a location where the mobile device (102A) is determined to be at rest.

6. The non-transitory computer-readable medium of claim 5 or the method of claim 5 or the mobile device (102A) of claim 2, wherein the generating the location profile (114) is based on transmitting the geoposition of the location where the mobile device (102A) is determined to be at rest to a service provider.

7. The non-transitory computer-readable medium of claim 5 or the method of claim 5, wherein the location profile (114) comprises at least one of a type of the location of rest, the location of rest for the duration of time, a time of day at the location of rest, a day at the location of rest, and a purchase made at the location of rest.

8. The non-transitory computer-readable medium of claim 5 or the method of claim 5 or the mobile device of claim 2, wherein the location profile (114) is analyzed to generate a targeted offer.

## Patentansprüche

1. Mobile Vorrichtung (102A), umfassend:
einen Empfänger zur Geopositionsbestimmung (108), konkret einen Empfänger zur globalen Positionsbestimmung (GPS), der ausgelegt ist, um eine Geoposition der mobilen Vorrichtung zu bestimmen;
einen Beschleunigungsmesser (110), der ausgelegt ist, um eine Beschleunigungsrate der mobilen Vorrichtung (102A) zu bestimmen; und
einen Prozessor, der mit dem Empfänger zur Geopositionsbestimmung (108) und dem Beschleunigungsmesser (110) in Kommunikation steht, wobei der Prozessor ausgelegt ist, um:
zu bestimmen, ob die mobile Vorrichtung (102A) innerhalb eines Standortes über eine Zeitdauer in Ruhezustand ist, unter Verwendung von Geopositionen der mobilen Vorrichtung (102A), die von dem Empfänger zur Geopositionsbestimmung bestimmt wurden, basierend auf einer Dauer von Nicht-Bewegung der mobilen Vorrichtung, und/oder einer Beschleunigungsrate und/oder einer Geschwindigkeit der mobilen Vorrichtung (102A),
den Empfänger zur Geopositionsbestimmung (108) nach Bestimmen, dass die mobile Vorrichtung (102A) innerhalb des Standorts über die Zeitdauer in Ruhezustand ist, abzuschalten und den Beschleunigungsmesser einzuschalten,
unter Verwendung der bestimmten Beschleunigungsrate zu bestimmen, ob die mobile Vorrichtung in Bewegung ist, basierend auf einer Bewegungsdauer und/oder der bestimmten Beschleunigungsrate und/oder einer Geschwindigkeit;
den Empfänger zur Geopositionsbestimmung nach Bestimmen, dass die mobile Vorrichtung in Bewegung ist, erneut einzuschalten und den Beschleunigungsmesser abzuschalten; und
Geopositionen der mobilen Vorrichtung im Ruhezustand an einen Standortserver (130) über ein Netzwerk zu übertragen.

2. Mobile Vorrichtung (102A) nach Anspruch 1, wobei der Prozessor weiter ausgelegt ist, um ein Standortprofil (114) zu erstellen, das einem Benutzer der mobilen Vorrichtung zugeordnet ist, wobei das Standortprofil (114) Informationen bezüglich eines Standorts umfasst, an dem bestimmt ist, dass die mobile Vorrichtung (102A) in Ruhezustand ist.

3. Verfahren, umfassend:
Bestimmen einer Geoposition einer mobilen Vorrichtung (102A) basierend auf Daten, die von einem Geopositionsempfänger (108) der mobilen Vorrichtung (102A) empfangen wurden;
Bestimmen einer Beschleunigungsrate der mobilen Vorrichtung (102A) basierend auf Signalen, die von einem Beschleunigungsmesser (110) der mobilen Vorrichtung (102A) empfangen wurden;
Bestimmen, ob die mobile Vorrichtung (102A) über eine Zeitdauer innerhalb eines Standorts in Ruhezustand ist, unter Verwendung von Geopositionen der mobilen Vorrichtung (102A), die von dem Empfänger zur Geopositionsbestimmung bestimmt wurden, basierend auf einer Dauer von Nicht-Bewegung der mobilen Vorrichtung und/oder einer Beschleunigungsrate der mobilen Vorrichtung (102A) und/oder Geschwindigkeit der mobilen Vorrichtung (102A);
Abschalten eines Empfängers zur Geopositionsbestimmung (108) der mobilen Vorrichtung (102A) und Einschalten des Beschleunigungsmessers nach Bestimmen, dass die mobile Vorrichtung (102A) in Bewegung ist;
Bestimmen, unter Verwendung der bestimmten Beschleunigungsrate, ob die mobile Vorrichtung in Bewegung ist, basierend auf einer Bewegungsdauer und/oder der bestimmten Beschleunigungsrate und/oder einer Geschwindigkeit;
erneutes Einschalten des Empfängers zur Geopositionsbestimmung und Abschalten des Beschleunigungsmessers nach Bestimmen, dass die mobile Vorrichtung in Bewegung ist; und
Übertragen von Geopositionen in Ruhezustand der mobilen Vorrichtung an einen Standortserver (130) über ein Netzwerk.

4. Nicht flüchtiges computerlesbares Medium, umfassend eine Vielzahl von Instruktionen, die, wenn sie von einem oder mehreren Prozessoren ausgeführt werden, verursachen, dass der eine oder die mehreren Prozessoren ein Verfahren ausführen, umfassend:
Bestimmen einer Geoposition einer mobilen Vorrichtung (102A) basierend auf Daten, die von einem Geopositionsempfänger (108) der mobilen Vorrichtung (102A) empfangen wurden;
Bestimmen einer Beschleunigungsrate der mobilen Vorrichtung (102A) basierend auf Signalen, die von einem Beschleunigungsmesser (110) der mobilen Vorrichtung (102A) empfangen wurden;
Bestimmen, ob die mobile Vorrichtung (102A) über eine Zeitdauer innerhalb eines Standorts in Ruhezustand ist, unter Verwendung von Geopositionen der mobilen Vorrichtung (102A), die von dem Empfänger zur Geopositionsbestimmung bestimmt wurden, basierend auf einer Dauer von Nicht-Bewegung der mobilen Vorrichtung und/oder einer Beschleunigungsrate der mobilen Vorrichtung (102A) und/oder Geschwindigkeit der mobilen Vorrichtung (102A);
Abschalten eines Empfängers zur Geopositionsbestimmung (108) der mobilen Vorrichtung (102A) und Einschalten des Beschleunigungsmessers nach Bestimmen, dass die mobile Vorrichtung (102A) innerhalb des Standorts über die Zeitdauer in Ruhezustand ist;
Bestimmen, unter Verwendung der bestimmten Beschleunigungsrate, ob die mobile Vorrichtung in Bewegung ist, basierend auf einer Bewegungsdauer und/oder der bestimmten Beschleunigungsrate und/oder einer Geschwindigkeit;
erneutes Einschalten des Empfängers zur Geopositionsbestimmung und Abschalten des Beschleunigungsmessers nach Bestimmen, dass die mobile Vorrichtung in Bewegung ist; und
Übertragen von Geopositionen in Ruhezustand der mobilen Vorrichtung an einen Standortserver (130) über ein Netzwerk.

5. Nicht flüchtiges computerlesbares Medium nach Anspruch 4 oder Verfahren nach Anspruch 3, wobei das Verfahren weiter Erzeugen eines Standortprofil (114) umfasst, das einem Benutzer der mobilen Vorrichtung (102A) zugeordnet ist, wobei das Standortprofil (114) Informationen bezüglich eines Standorts umfasst, an dem bestimmt ist, dass die mobile Vorrichtung (102A) in Ruhezustand ist.

6. Nicht flüchtiges computerlesbares Medium nach Anspruch 5 oder Verfahren nach Anspruch 5 oder mobile Vorrichtung (102A) nach Anspruch 2, wobei Erzeugen des Standortprofils (114) auf Übertragung der Geoposition des Standorts, an dem bestimmt ist, dass die mobile Vorrichtung (102A) in Ruhezustand ist, an einen Serviceprovider basiert.

7. Nicht flüchtiges computerlesbares Medium nach Anspruch 5 oder Verfahren nach Anspruch 5, wobei das Standortprofil (114) mindestens einen Typ von Standort in Ruhezustand, Standort in Ruhezustand über die Zeitdauer, einer Tageszeit an dem Standort in Ruhezustand, einem Tag am Standort im Ruhezustand und einem am Standort im Ruhezustand getätigten Einkauf umfasst.

8. Nicht flüchtiges computerlesbares Medium nach Anspruch 5 oder Verfahren nach Anspruch 5 oder mobile Vorrichtung nach Anspruch 2, wobei das Standortprofil (114) analysiert wird, um ein zielgerichtetes Angebot zu erstellen.

## Revendications

1. Dispositif mobile (102A) comprenant :
un récepteur de géopositionnement (108), en particulier un récepteur de géopositionnement mondial (GPS), configuré pour déterminer une géoposition du dispositif mobile ;
un accéléromètre (110) configuré pour déterminer une vitesse d'accélération du dispositif mobile (102A) ; et
un processeur en communication avec le récepteur de géopositionnement (108) et l'accéléromètre (110), le processeur étant configuré pour :
déterminer si le dispositif mobile (102A) est ou non au repos à un emplacement pendant une durée, en utilisant des géopositions du dispositif mobile (102A) déterminées par le récepteur de géopositionnement, sur la base d'une durée d'immobilité du dispositif mobile, et/ou d'une vitesse d'accélération, et/ou d'une vélocité du dispositif mobile (102A),
désengager le récepteur de géopositionnement (108) et engager l'accéléromètre à la détermination que le dispositif mobile (102A) est au repos à l'emplacement pendant la durée,
déterminer, en utilisant la vitesse d'accélération déterminée, si le dispositif mobile est ou non en mouvement sur la base d'une durée de mouvement, et/ou de la vitesse d'accélération déterminée et/ou d'une vélocité,
réengager le récepteur de géopositionnement et désengager l'accéléromètre à la détermination que le dispositif mobile est en mouvement, et
transmettre, à destination d'un serveur de localisation (130) sur un réseau, des géopositions au repos du dispositif mobile.

2. Dispositif mobile (102A) selon la revendication 1, dans lequel le processeur est en outre configuré pour générer un profil d'emplacement (114) associé à un utilisateur du dispositif mobile, dans lequel le profil d'emplacement (114) comprend des informations relatives à un emplacement auquel il est déterminé que le dispositif mobile (102A) est au repos.

3. Procédé comprenant :
la détermination d'une géoposition d'un dispositif mobile (102A) sur la base de données reçues en provenance d'un récepteur de géopositionnement (108) du dispositif mobile (102A) ;
la détermination d'une vitesse d'accélération du dispositif mobile (102A) sur la base de signaux reçus en provenance d'un accéléromètre (110) du dispositif mobile (102A) ;
la détermination si le dispositif mobile (102A) est ou non au repos à un emplacement pendant une durée, en utilisant des géopositions du dispositif mobile (102A) déterminées par le récepteur de géopositionnement, sur la base d'une durée d'immobilité du dispositif mobile, et/ou d'une vitesse d'accélération du dispositif mobile (102A), et/ou d'une vélocité du dispositif mobile (102A) ;
le désengagement d'un récepteur de géopositionnement (108) du dispositif mobile (102A) et l'engagement de l'accéléromètre à la détermination que le dispositif mobile (102A) est en mouvement ;
la détermination, en utilisant la vitesse d'accélération déterminée, si le dispositif mobile est ou non en mouvement sur la base d'une durée de mouvement, et/ou de la vitesse d'accélération déterminée et/ou d'une vélocité ;
le réengagement du récepteur de géopositionnement et le désengagement de l'accéléromètre à la détermination que le dispositif mobile est en mouvement ; et
la transmission, à destination d'un serveur de localisation (130) sur un réseau, de géopositions au repos du dispositif mobile.

4. Support lisible par ordinateur non transitoire comprenant une pluralité d'instructions qui, lorsqu'elles sont exécutées par un ou plusieurs processeurs, amènent les un ou plusieurs processeurs à effectuer un procédé comprenant :
la détermination d'une géoposition d'un dispositif mobile (102A) sur la base de données reçues d'un récepteur de géopositionnement (108) du dispositif mobile (102A) ;
la détermination d'une vitesse d'accélération du dispositif mobile (102A) sur la base de signaux reçus en provenance d'un accéléromètre (110) du dispositif mobile (102A) ;
la détermination si le dispositif mobile (102A) est ou non au repos à un emplacement pendant une durée, en utilisant des géopositions du dispositif mobile (102A) déterminées par le récepteur de géopositionnement, sur la base d'une durée d'immobilité du dispositif mobile, et/ou d'une vitesse d'accélération du dispositif mobile (102A), et/ou d'une vélocité du dispositif mobile (102A) ;
le désengagement d'un récepteur de géopositionnement (108) du dispositif mobile (102A) et l'engagement de l'accéléromètre à la détermination que le dispositif mobile (102A) est au repos à l'emplacement pendant la durée ;
la détermination, en utilisant la vitesse d'accélération déterminée, si le dispositif mobile est ou non en mouvement sur la base d'une durée de mouvement, et/ou de la vitesse d'accélération déterminée et/ou d'une vélocité ;
le réengagement du récepteur de géopositionnement et le désengagement de l'accéléromètre à la détermination que le dispositif mobile est en mouvement ; et
la transmission, à destination d'un serveur de localisation (130) sur un réseau, de géopositions au repos du dispositif mobile.

5. Support lisible par ordinateur non transitoire selon la revendication 4 ou procédé selon la revendication 3, dans lequel le procédé comprend en outre la génération d'un profil d'emplacement (114) associé à un utilisateur du dispositif mobile (102A), dans lequel le profil d'emplacement (114) comprend des informations relatives à un emplacement auquel il est déterminé que le dispositif mobile (102A) est au repos.

6. Support lisible par ordinateur non transitoire selon la revendication 5 ou procédé selon la revendication 5 ou dispositif mobile (102A) selon la revendication 2, dans lequel la génération du profil d'emplacement (114) est basée sur la transmission de la géoposition de l'emplacement auquel il est déterminé que le dispositif mobile (102A) est au repos.

7. Support lisible par ordinateur non transitoire selon la revendication 5 ou procédé selon la revendication 5, dans lequel le profil d'emplacement (114) comprend au moins l'un d'un type de l'emplacement de repos, l'emplacement de repos pendant la durée, une heure de la journée à l'emplacement de repos, un jour à l'emplacement de repos, et un achat réalisé à l'emplacement de repos.

8. Support lisible par ordinateur non transitoire selon la revendication 5 ou procédé selon la revendication 5 ou dispositif mobile selon la revendication 2, dans lequel le profil d'emplacement (114) est analysé pour générer une offre ciblée.
